Europäisches Patentamt

European Patent Office

Office européen des brevets

(19)

(11) **EP 0 756 675 B1**

(12) **FASCICULE DE BREVET EUROPEEN**

(45) Date de publication et mention
de la délivrance du brevet:
**12.08.1998 Bulletin 1998/33**

(21) Numéro de dépôt: **95919475.4**

(22) Date de dépôt: **04.05.1995**

(51) Int Cl.6: **F16H 33/18**

(86) Numéro de dépôt international:
**PCT/FR95/00580**

(87) Numéro de publication internationale:
**WO 95/30848 (16.11.1995 Gazette 1995/49)**

(54) **TRANSMISSION MECANIQUE A VARIATION CONTINUE AUTOMATIQUE ET SON PROCEDE DE MISE EN ACTION**

STUFENLOSES, AUTOMATISCHES, MECHANISCHES GETRIEBE UND SEINE ARBEITSWEISE

AUTOMATIC CONTINUOUSLY VARIABLE MECHANICAL TRANSMISSION AND METHOD FOR ACTUATING SAME

(84) Etats contractants désignés:
**CH DE ES FR GB IT LI NL SE**

(30) Priorité: **04.05.1994 FR 9405654**

(43) Date de publication de la demande:
**05.02.1997 Bulletin 1997/06**

(73) Titulaire: **Valdenaire, Jean**
**25310 Herimoncourt (FR)**

(72) Inventeur: **Valdenaire, Jean**
**25310 Herimoncourt (FR)**

(74) Mandataire: **Nithardt, Roland**
**CABINET NITHARDT ET ASSOCIES**
**24 rue de l'Est - B.P. 1445**
**68071 Mulhouse Cédex (FR)**

(56) Documents cités:
**FR-A- 842 760          GB-A- 995 305**

• **"Antriebstechnik" Nr1, 1989, p. 45,46 "Es ist kein formschlüssiges stufenloses Getriebe möglich" de A.JAHR**

**Description**

La présente invention concerne une transmission mécanique à variation continue automatique, comportant un arbre d'entrée, un arbre de sortie, un point d'appui lié à un carter de la transmission, une liaison cinématique positive pourvue d'un ensemble planétaire à engrenages et reliant l'arbre d'entrée, le point d'appui et l'arbre de sortie, et des moyens de compensation de couple comportant des masselottes excentriques soumises à des forces centrifuges qui produisent des couples sur deux jeux de satellites de l'ensemble planétaire. L'invention concerne aussi un procédé de mise en action d'une telle transmission.

Par le terme de liaison cinématique positive, on entend désigner ici toute liaison entre pièces mobiles ou fixes au moyen d'un engagement positif par coopération de formes, de préférence des engrenages, mais aussi d'autres moyens à effets analogues tels que les chaînes et les courroies crantées.

Une telle transmission est utilisable notamment dans des véhicules automobiles, ferroviaires ou autres, mais aussi pour entraîner toute sorte de machines à vitesse variable, par exemple des treuils, des ventilateurs, des compresseurs, des machines agricoles ou de travaux publics, des broyeurs, des machines à tisser, ainsi que pour entraîner des machines à vitesse constante telles que des génératrices électriques au moyen d'éoliennes ou de turbines à vitesse variable.

Pour l'entraînement des véhicules automobiles, un type classique de transmission automatique comprend une boîte de vitesses commutable, précédée d'un convertisseur hydrodynamique de couple. Celui-ci présente des pertes énergétiques. A l'heure actuelle, on cherche à réduire ces pertes en ajoutant un embrayage de prise directe, ainsi qu'une dérivation de puissance par une voie de transmission positive disposée en parallèle par rapport au convertisseur. Pour faire fonctionner une telle transmission de manière automatique et optimale, un dispositif électronique de commande est nécessaire. Tous ces moyens augmentent encore la complexité, le poids et les coûts de construction et d'entretien.

C'est pourquoi on cherche à remplacer ces transmissions par des mécanismes d'autres types, à variation continue sur toute la plage des vitesses de l'arbre de sortie, pour éviter l'utilisation d'une boîte de vitesses commutable. Une solution connue utilise un variateur à courroie et à poulies de diamètre variable. Ces variateurs peuvent avoir un système de réglage automatique basé sur la force centrifuge. Cependant, la courroie transmet les efforts par friction et cela implique toujours des pertes énergétiques et des problèmes d'échauffement qui limitent l'application de ces transmissions au domaine des faibles puissances. De plus, il existe toujours un risque de glissement de la courroie.

D'autre part, on connaît des coupleurs mécaniques autorisant une différence de vitesse entre l'arbre d'entrée et l'arbre de sortie, grâce à un dispositif centrifuge de compensation de couple qui agit sur un engrenage différentiel reliant l'arbre d'entrée à l'arbre de sortie. Le brevet GB-A-995305 décrit un coupleur de ce genre, où les satellites de l'engrenage différentiel planétaire portent chacun un train planétaire secondaire formé par un porte-satellites secondaire solidaire du satellite principal, quatre satellites secondaires pourvus chacun d'une masselotte excentrique, et un pignon planétaire secondaire agencé pour maintenir chaque masselotte dans une position constante par rapport à la direction de la force centrifuge qu'elle subit, afin que cette force crée un couple centrifuge aussi régulier que possible au cours de la rotation de l'ensemble. Un dispositif manuel de commande peut agir sur la position de chaque planétaire secondaire pour sélectionner l'une de quatre positions des masselottes, à savoir des positions respectives de marche avant, neutre, de marche arrière et de blocage contre une surmultiplication. Dans une variante, les satellites secondaires sont remplacés par un ensemble de leviers articulés portant des masselottes mobiles qui créent un couple centrifuge sur le satellite principal. Il s'agit d'une construction compliquée et délicate qui ne convient pas pour transmettre des couples importants à des vitesses élevées. Surtout, l'inconvénient majeur inhérent à de tels coupleurs est qu'ils ne peuvent pas fonctionner comme convertisseurs de couple, parce qu'il n'y a pas de point d'appui ou de réaction sur un élément fixe, par exemple un carter. C'est pourquoi ils ne peuvent pas appliquer à l'arbre de sortie un couple supérieur au couple d'entrée, quelle que soit la vitesse de l'arbre de sortie.

Le brevet FR-A-842 760 décrit une transmission du genre indiqué dans le préambule de la revendication 1. Cet appareil connu sous le nom de transmission Hobbs fonctionne effectivement comme convertisseur de couple, grâce à une réaction d'appui sur carter qui permet de multiplier le couple quand la vitesse de sortie est faible. L'appareil comporte des masselottes excentriques sur des satellites de deux trains planétaires qui sont centrés sur l'axe commun des arbres d'entrée et de sortie. Durant un tour d'un train planétaire, les forces centrifuges produisent des couples centrifuges alternés, c'est-à-dire qui changent de sens à cause de la rotation des satellites. Il en résulte des impulsions alternées, dont celles de sens positif sont sélectionnées par un dispositif à roue libre qui les transmet à l'arbre de sortie par l'intermédiaire d'un dispositif élastique ou à inertie, effectuant un lissage du couple de sortie pulsé. Comme les dispositifs à roue libre supportent très mal de tels couples alternés ou pulsés à une fréquence élevée, qui est du même ordre de grandeur que les vitesses des arbres d'entrée et de sortie, les transmissions de ce genre n'ont pas pu s'imposer dans la pratique.

La présente invention a pour but de créer une transmission automatique à variation continue qui permet d'éviter les inconvénients précités des transmissions connues. L'invention concerne en particulier une transmission continue, évitant toute transmission d'énergie par friction ou par un écoulement de fluide, et capable de transmettre des couples élevés et continus dans une large gamme de vitesse de l'arbre de sortie, notamment pour les applications à l'entraînement des véhicules, ou inversement dans une large gamme de vitesse de l'arbre d'entrée si l'arbre de sortie doit tourner à une vitesse constante.

Selon l'invention, ce problème est résolu par une transmission du genre indiqué en préambule, caractérisée :

- en ce que le premier et le second jeu de satellites sont portés par un porte-satellites commun,
- en ce que le premier jeu de satellites coopère avec au moins une denture formant ledit point d'appui et est associé à un premier dispositif centrifuge à masselottes excentriques;
- en ce que le second jeu de satellites coopère avec des roues planétaires liées respectivement à l'arbre d'entrée et à l'arbre de sortie et est associé à un second dispositif centrifuge à masselottes excentriques,
- en ce que chacun des deux dispositifs centrifuges comporte, sur chaque satellite du premier et du second jeu, un train planétaire secondaire dont des satellites secondaires portent les masselottes excentriques et tournent sur eux-mêmes à une vitesse égale à celle du porte-satellites commun,
- et en ce que l'excentricité des masselottes est réglable en marche.

Grâce à ce principe, on obtient à la fois une variation continue du rapport de transmission, donc de la vitesse de l'arbre de sortie, sur toute la gamme de zéro à la vitesse maximale, et en même temps le couple moteur est multiplié sur l'arbre de sortie grâce à la réaction d'appui sur le carter comme le fait un convertisseur hydrodynamique, mais sans les inconvénients d'un tel organe. Grâce à la liaison cinématique entièrement positive, qui peut être assurée par des roues dentées toujours en prise, la transmission selon l'invention constitue un convertisseur de couple entièrement mécanique, où les seules pertes énergétiques sont les pertes usuelles par engrènement et dans les paliers, si bien que le rendement est très proche de 1 à tous les régimes.

Le fait que les satellites secondaires reliés à une masselotte tournent sur eux-mêmes à la même vitesse que le porte-satellites principal commun est essentiel, parce qu'il permet de maintenir le bras de levier de la force centrifuge dans une direction approximativement perpendiculaire à cette force, si bien que le couple centrifuge produit par chaque masselotte ne change pas de sens et reste totalement constant pour une excentricité donnée, comme on le décrira plus loin. Il n'y a donc pas de couple alternatif ou impulsif à la sortie de la liaison cinématique positive et l'on peut se passer des dispositifs à roue libre et des dispositifs élastiques ou à inertie des transmissions du type Hobbs.

Le fait que l'excentricité des masselottes est réglable en marche, permet d'ajuster en permanence le couple de réaction du carter à la valeur nécessaire pour vaincre le couple résistant de l'arbre de sortie.

Dans une forme particulièrement avantageuse de la transmission, celle-ci comporte des moyens pour régler automatiquement l'excentricité des masselottes en fonction de la vitesse du porte-satellites commun. De préférence, lesdits moyens pour régler l'excentricité comportent un dispositif de commande monté sur le porte-satellites commun et actionné par la force centrifuge. Cette transmission peut comporter en outre une commande extérieure agissant sur le dispositif de commande d'excentricité en superposition à la force centrifuge.

Dans une forme de réalisation préférée, la variation de l'excentricité des masselottes en fonction de la vitesse du porte-satellites commun est différente dans les deux dispositifs centrifuges, la transmission ayant un régime dit de prise directe où l'excentricité est nulle dans le premier dispositif et non nulle dans le second dispositif.

De préférence, chaque train planétaire secondaire comporte une seule masselotte excentrique, qui est montée de manière coulissante et pivotante sur au moins deux satellites de ce train planétaire. Par conséquent, la masselotte produit le même couple centrifuge sur chaque satellite secondaire et, par symétrie, ce couple est constant sur un tour complet du dispositif centrifuge. Le dispositif de commande d'excentricité peut être commun aux deux dispositifs centrifuges.

Dans une forme de réalisation particulière, chaque train planétaire secondaire du premier dispositif centrifuge comporte un élément formant une roue planétaire secondaire et un élément formant un porte-satellites secondaire, lesdits éléments étant montés coaxialement sur le porte-satellites commun et coopérant chacun directement ou indirectement, avec au moins une denture formant un point d'appui sur le carter et leur imposant un rapport de vitesses fixe. De manière analogue, chaque train planétaire secondaire du second dispositif centrifuge comporte un élément formant une roue planétaire secondaire et un élément formant un porte-satellites secondaire, lesdits éléments étant reliés l'un à l'autre au moyen de pignons qui leur imposent un rapport de vitesses fixe.

Pour former une transmission présentant un diamètre relativement faible, le premier et le second dispositif centrifuge peuvent être disposés l'un derrière l'autre dans la direction d'un axe commun des arbres d'entrée et de sortie.

Par contre, pour former une transmission présentant une faible longueur, le premier et le second dispositif centrifuge peuvent être disposés sensiblement dans un même plan radial par rapport à un axe commun des arbres d'entrée et de sortie, les satellites du premier jeu étant placés entre les satellites du second jeu.

Selon un autre aspect, l'invention concerne un procédé de mise en action d'une transmission telle que définie ci-dessus, caractérisé en ce que l'on compare la vitesse de l'arbre de sortie à la vitesse de l'arbre d'entrée, en ce que l'on donne une excentricité maximale aux masselottes pour une valeur minimale de l'arbre de sortie, et en ce que l'on réduit l'excentricité des masselottes quand la vitesse de l'arbre de sortie se rapproche de celle de l'arbre d'entrée. Lorsque la vitesse de l'arbre de sortie est sensiblement égale à celle de l'arbre d'entrée, l'excentricité des masselottes est réglée à une valeur nulle dans le premier dispositif centrifuge et à une valeur réduite prédéterminée dans le second dispositif centrifuge. Si la vitesse de l'arbre de sortie dépasse celle de l'arbre d'entrée, l'excentricité des masselottes peut être réglée à une valeur qui s'inverse dans le premier dispositif centrifuge et à une valeur inférieure à ladite valeur réduite prédéterminée dans le second dispositif centrifuge.

Cela permet de réduire progressivement le couple de réaction du carter en fonction de la diminution du couple résistant, qui se traduit par une augmentation de vitesse de l'arbre de sortie. En pratique, le réglage peut se baser sur des mesures des vitesses ou des couples des deux arbres, au moyen de capteurs appropriés.

La présente invention et ses avantages apparaîtront mieux dans la description suivante d'un exemple de réalisation et de deux variantes, en référence aux dessins annexés, dans lesquels :

- la figure 1 est une représentation schématique simplifiée illustrant dans son principe une transmission selon l'invention,

- la figure 2 est un schéma analogue à la figure 1, montrant plus en détail une première forme préférée d'une transmission conforme au principe de la figure 1,

- la figure 3 est une vue partielle en coupe axiale suivant la ligne III-III de la figure 4, montrant des masselottes montées avec une excentricité variable sur des paires de satellites secondaires des deux dispositifs centrifuges de la transmission de la figure 2, et montrant également un dispositif commun de commande de l'excentricité variable des deux masselottes représentées,

- la figure 4 est une vue en coupe partielle suivant la ligne IV-IV de la figure 3,

- la figure 5 est une vue en coupe partielle suivant la ligne V-V de la figure 4,

- la figure 6 est une vue axiale d'un coulisseau du dispositif de commande d'excentricité,

- la figure 7 est une vue en coupe suivant la ligne VII-VII de la figure 6,

- la figure 8 est un schéma montrant la cinématique d'une masselotte excentrique dans un plan transversal de la transmission au cours d'une révolution autour de l'axe central,

- la figure 9 est un diagramme de Ravigneaux représentant les vitesses des arbres d'entrée et de sortie et du porte-satellites commun de l'ensemble planétaire de la transmission de la figure 2,

- la figure 10 est une vue en coupe longitudinale de la moitié supérieure d'une transmission construite selon la figure 2,

- la figure 11 est un diagramme de Ravigneaux pour une variante de la transmission de la figure 2, destinée à transmettre une plus grande puissance,

- la figure 12 est un schéma analogue à celui de la figure 2, représentant une seconde forme préférée d'une transmission selon la figure 1, pour des puissances moyennes ou faibles, et

- la figure 13 est un diagramme de Ravigneaux pour la transmission de la figure 12.

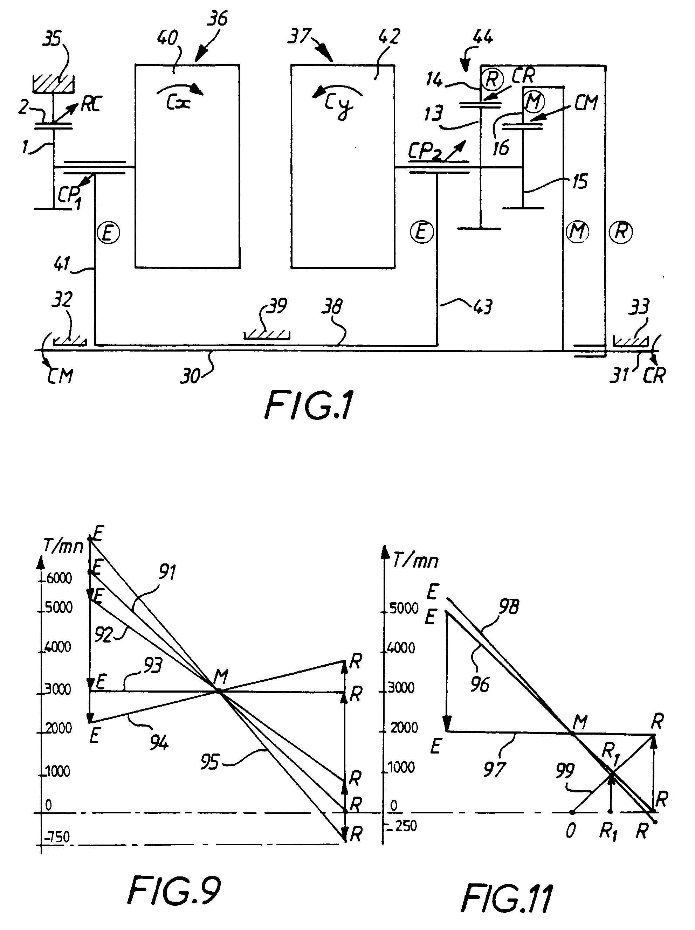

La transmission représentée schématiquement à la figure 1 comporte un arbre d'entrée 30 et un arbre de sortie 31 disposés dans le prolongement l'un de l'autre et supportés dans un carter (non représenté) par des paliers 32 et 33. Une liaison cinématique positive est réalisée entre un point d'appui 35 du carter et chacun des arbres 30 et 31 à l'aide de deux dispositfs planétaires centrifuges 36 et 37 qui sont complémentaires l'un de l'autre et sont liés par des éléments de liaison 38 tels que des bras longitudinaux ou un arbre intermédiaire creux qui entoure l'arbre d'entrée 30. Cet arbre peut être supporté par un palier intermédiaire 39 et/ou par l'arbre d'entrée 30. Plus précisément, le premier dispositif planétaire centrifuge 36 comporte plusieurs éléments centrifuges 40, deux dans le cas présent, qui seront décrits en détail plus loin et dont chacun exerce un couple centrifuge Cx sur l'un des deux (ou plus) satellites 1 supportés par un porte-satellites 41 et s'engrenant sur une couronne à denture intérieure 2 liée au point d'appui 35. De manière analogue, le second dispositif planétaire centrifuge 37 comporte deux éléments centrifuges 42 exerçant un couple centrifuge Cy sur l'une de deux paires de satellites 13 et 15 supportés par un porte-satellites 43 qui est lié au porte-satellites 41 par l'arbre 38. Les satellites 13 s'engrènent dans une couronne 14 liée à l'arbre de sortie 31. Les satellites 15 ont un plus petit diamètre que les satellites 13; ils s'engrènent dans une couronne 16 liée à l'arbre d'entrée 30. Les pignons 13 à 16 et le porte-satellites 43 constituent un train planétaire 44 qui assure une liaison motrice positive entre l'arbre d'entrée 30, transmettant un couple CM, et l'arbre de sortie 31 transmettant un couple résistant CR, et assure l'équilibre entre ces deux couples au moyen d'un couple de réaction du carter RC, c'est-à-dire que : RC + CM + CR = 0. Le premier dispositif centrifuge 36 prend appui sur le carter au point 35 pour transmettre le couple RC au second dispositif centrifuge 37 par l'arbre 38, c'est-à-dire que RC = $-CP_1$. Le second dispositif planétaire 37 équilibre en permanence le couple moteur CM, le couple résistant CR et la réaction du carter RC transmise par l'arbre 38, c'est-à-dire que $CP_2 = - CP_1 = RC$. Cet équilibre est assuré à tous les régimes par le dispositif centrifuge 37, dont le principe de construction est symétrique à celui du dispositif 36. La variation de vitesse de l'arbre de sortie 31 est automatiquement commandée par l'équilibre des couples en fonction de la variation du couple résistant CR.

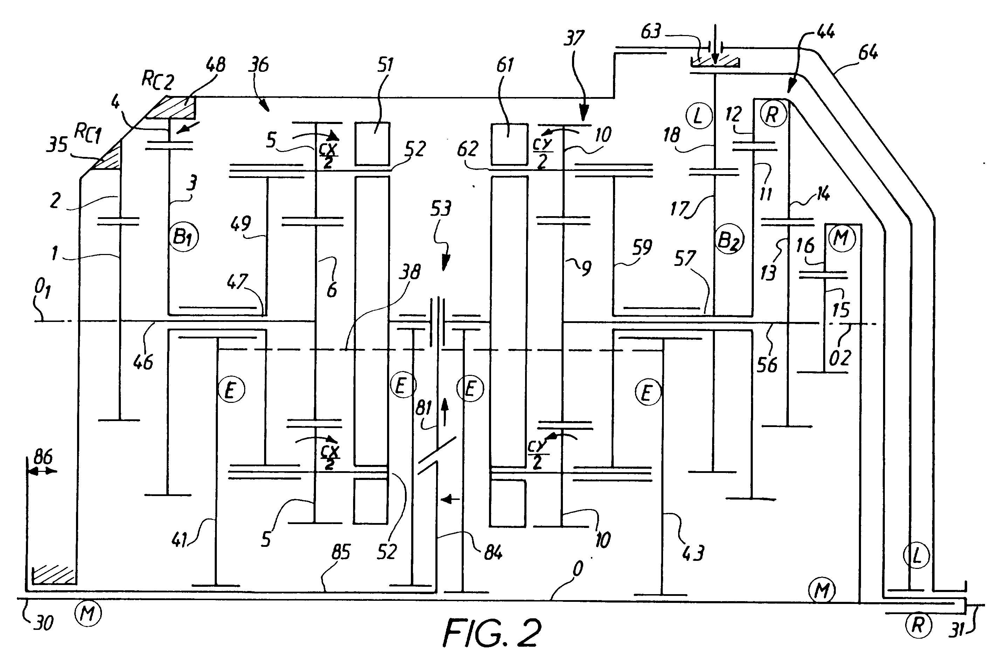

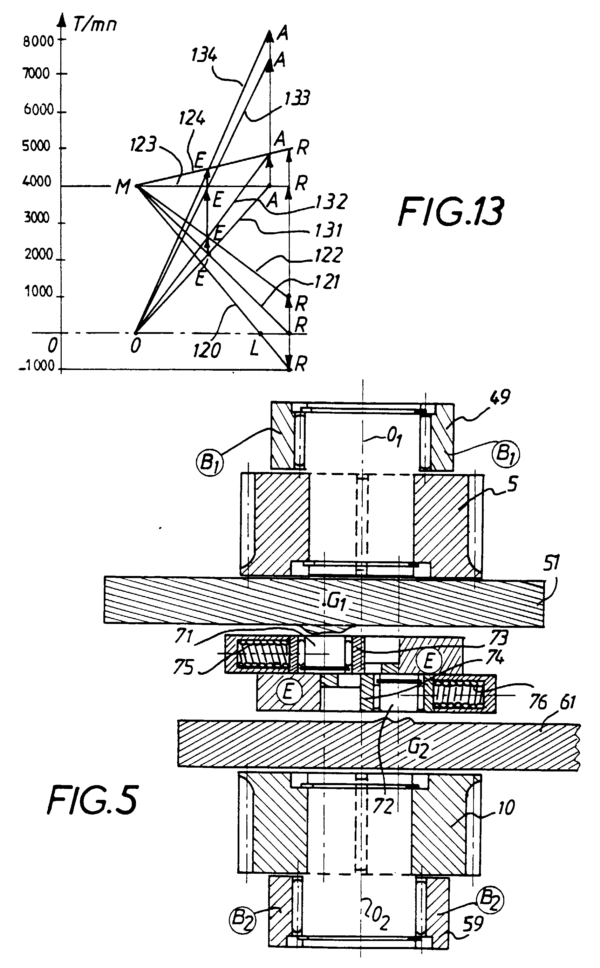

Les figures 2 à 10 illustrent plus en détail une première forme de réalisation d'une transmission selon la figure 1. Outre les éléments déjà représentés dans la figure 1, on voit dans la figure 2 que chacun des deux satellites du dispositif 36 (disposés à 180° l'un de l'autre) comporte un arbre de satellite 46 d'axe $O_1$, rotatif sur le porte-satellites 41 et solidaire des pignons 1 et 6. Le pignon satellite 1 s'engrène sur la couronne 2 liée au point d'appui 35 qui exerce un couple de réaction $RC_1$. Un arbre creux 47 monté coaxialement autour de l'arbre 46 est solidaire d'un autre pignon satellite 3 qui s'engrène sur une couronne 4 liée à un second point d'appui sur carter 48 exerçant un couple de réaction $RC_2$. La réaction RC mentionnée plus haut est égale à $RC_1 + RC_2$. L'arbre 47 est également solidaire d'un porte-satellites 49 portant deux pignons satellites opposés 5 qui s'engrènent sur le pignon 6 pour former un train planétaire secondaire partiel centré sur l'axe $O_1$, lequel tourne autour de l'axe central O des arbres d'entrée 30 et de sortie 31. Une masselotte 51 est supportée par les deux satellites secondaires 5, grâce à des pivots respectifs 52 dont l'excentricité sur le satellite 5 correspondant est variable et crée un couple centrifuge Cx/4 sur chaque satellite 5. Cette excentricité variable est commandée au moyen d'un dispositif de commande 53 monté sur le porte-satellites principal 41.

La construction du second dispositif planétaire centrifuge 37 est analogue, mais disposée symétriquement par rapport à celle du premier dispositif 36. Leur deux porte-satellites 41 et 43 sont solidarisés par plusieurs bras de liaison longitudinaux 38. Chacun des deux satellites du dispositif 37 comporte un arbre de satellite 56 d'axe $O_2$ qui, dans le présent exemple, est aligné sur l'axe $O_1$. Toutefois cette condition d'alignement n'est pas obligatoire. L'arbre 56 est muni des pignons satellites 13 et 15 déjà mentionnés, ainsi que d'un pignon 9. Un arbre creux 57 monté coaxialement autour de l'arbre 56 est solidaire d'un porte-satellites 59 portant deux satellites opposés 10 qui s'engrènent sur le pignon 9 pour former un train planétaire secondaire partiel du dispositif centrifuge 37. Une masselotte 61 à excentricité variable est montée sur les satellites 10 par des pivots 62, de manière analogue à la masselotte 51. Son excentricité variable est également commandée au moyen du dispositif de commande 53, mais elle n'est jamais égale à celle de la masselotte 51.

L'arbre creux 57 porte en outre un pignon satellite 11 qui s'engrène dans une couronne 12 liée à la couronne 22 et à l'arbre de sortie 31, et un pignon satellite 17 qui s'engrène dans une couronne 18 appartenant à un dispositif de marche arrière. La couronne 18 est susceptible de tourner autour de l'axe central O, mais aussi d'être bloquée pour la marche arrière au moyen d'un frein 63 prenant appui sur un élément de carter 64 de la transmission.

Pour faciliter la description du fonctionnement de la transmission, on a désigné par des lettres les principaux éléments rotatifs dans les figures 1 et 2 :

M : arbre d'entrée 30, couronne 16
R : arbre de sortie 31, couronnes 12 et 14
$B_1$ : pignon 3, arbre 47, porte-satellites secondaire 49
$B_2$ : pignons 11 et 17, arbre 57, porte-satellites secondaire 59
E : porte-satellites 41 et 43, élément de liaison 38
L : couronne 18 du dispositif de marche arrière.

Les vitesses de rotation de ces éléments seront désignées par VE, VR, etc, représentant des vitesses relatives des éléments E, R, etc. par rapport à la vitesse VM = 1 de l'arbre d'entrée 30 (arbre moteur).

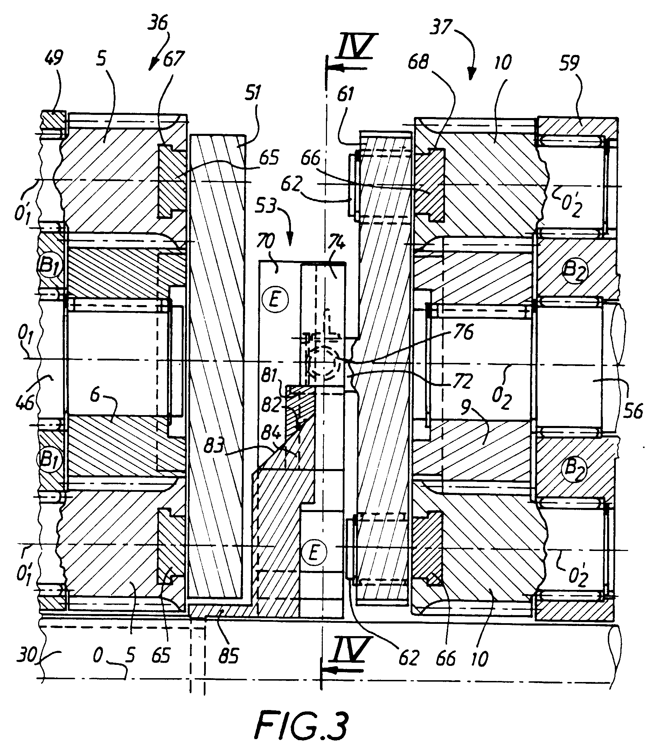

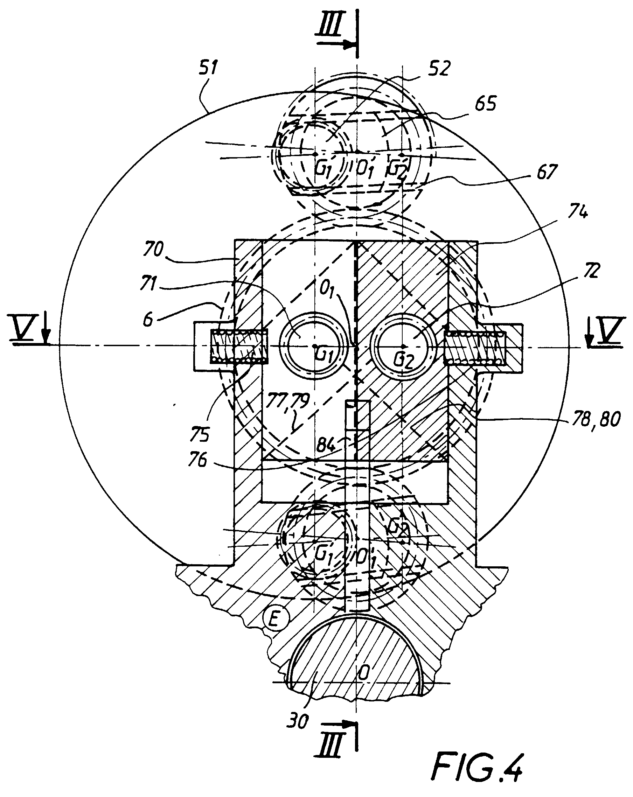

L'agencement des masselottes 51 et 61, avec leur dispositif commun de commande d'excentricité 53, est représenté plus en détail dans les figures 3 à 7. Dans le présent exemple, chaque masselotte 51 a la forme d'une plaque circulaire (figure 4), avec un centre de gravité $G_1$ situé au milieu entre les centres $G'_1$ de ses deux pivots 52. Chaque masselotte a une forme analogue, avec un centre de gravité $G_2$ situé au milieu entre les centres $G'_2$ de ses deux pivots 62. Chaque pivot 52, 62 est monté à l'aide d'un roulement dans la masselotte 51, 61. Il est solidaire d'un patin 65, 66 qui peut coulisser dans une rainure radiale en T 67, 68 du satellite correspondant 5, 10. Comme on le décrira plus loin, les rayons des cercles primitifs des pignons des dispositifs centrifuges 36 et 37 sont définis de telle manière que la vitesse de rotation des satellites secondaires 5 et 10 soit toujours égale à celle de l'élément E constituant le porte-satellites commun aux deux dispositifs 36 et 37. En conséquence, les rainures 67 et 68 des satellites secondaires gardent une orientation constante par rapport à l'élément E, donc par rapport aux forces centrifuges prédominantes dues à la rotation de cet élément autour de l'axe O. En d'autres termes, la forme du triangle $O_1$, $O'_1$, $G'_1$ (figure 4) ne varie pas, pour une excentricité donnée, pendant la rotation du train planétaire formé par les pignons 5 et 6. De même, dans l'autre dispositif centrifuge 37, la forme du triangle $O_2$, $O'_2$, $G'_2$ ne varie pas, pour une excentricité donnée, pendant la rotation du train planétaire formé par les pignons 9 et 10.

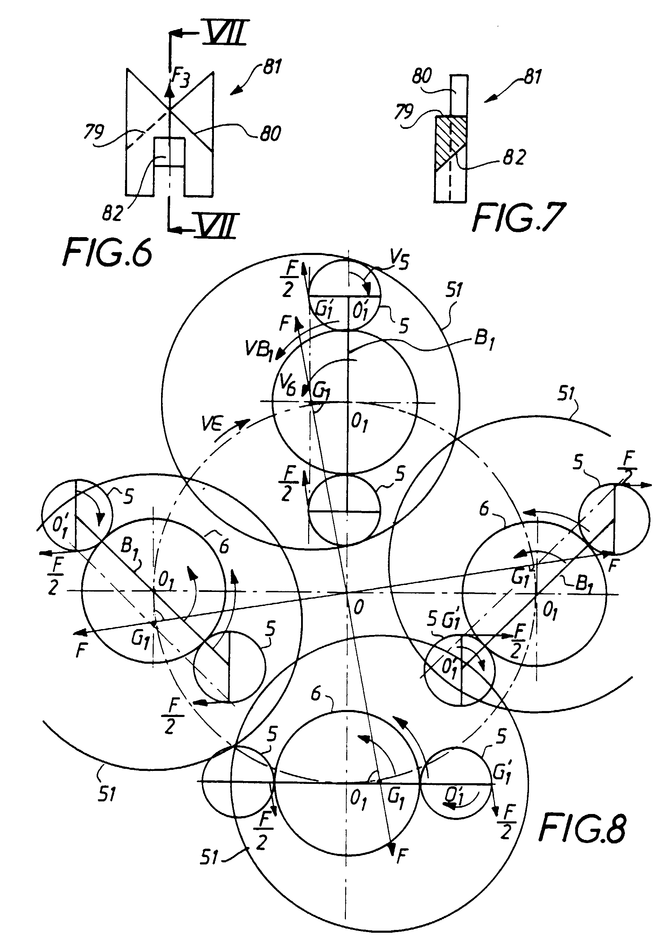

Les conditions cinématiques exposées ci-dessus sont illustrées par la figure 8, qui montre quatre positions successives d'un des deux éléments centrifuges 40 du premier dispositif centrifuge 36 au cours d'une révolution autour de l'axe central O à la vitesse de rotation VE du porte-satellites commun E. Dans le train planétaire secondaire, dont le porte-satellites $B_1$ est représenté par un trait gras et tourne à la vitesse $VB_1$ autour de l'axe $O_1$, le planétaire 6 tourne à une vitesse V6 et les satellites secondaires 5 portant la masselotte 51 tournent sur eux-mêmes à une vitesse V5 qui est égale à VE par construction. C'est pourquoi chaque segment $O_1'G_1'$, représentant l'excentricité de la masselotte 51, forme toujours un angle constant avec le segment radial $OO_1$, donc aussi un angle constant avec la force centrifuge F agissant au centre $G_1$ de la masselotte. Cette force se répartit en parts égales F/2 sur les deux satellites 5 et elle applique à chacun d'eux le même couple centrifuge Cx/4. Comme la distance $OG_1$ ne varie pas au cours d'une révolution, la force F et le couple centrifuge Cx sont aussi constants ; ils varient seulement lorsque la vitesse VE et/ou l'excentricité de la masselotte varient. Dans le second dispositif centrifuge 37, la construction est la même, de sorte que le couple centrifuge Cy est aussi constant sur un tour. Il en résulte qu'en régime permanent tous les couples sont constants dans la transmission.

En référence aux figures 3 à 7, on voit que le dispositif 53 de commande d'excentricité des deux masselottes 51 et 61 disposées face à face est porté par un bras radial creux 70 de l'élément E. Chaque masselotte 51, 61 comporte un tourillon central 71, 72 qui est monté par un roulement à aiguilles dans un coulisseau 73, 74 monté de manière coulissante dans le bras 70 et sollicité par un ressort de compression 75, 76 en direction tangentielle, donc perpendiculaire à $OO_1$. Chaque coulisseau 73, 74 présente une rampe 77, 78 inclinée de préférence à 45° par rapport à la direction radiale $OO_1$ et s'appuyant en glissant sur un plan incliné correspondant 79, 80 d'un coulisseau radial 81 monté dans le bras 70. Ce coulisseau 81 est représenté en vue axiale à la figure 6 et en coupe à la figure 7. Lorsque l'élément E tourne, le coulisseau subit une force centrifuge $F_3$ qui, par appui entre les plans inclinés 79, 80 et les rampes 77, 78, tend à repousser les coulisseaux 73, 74 contre les ressorts 75, 76, donc à imposer aux masselottes 51 et 61 une excentricité qui est déterminée par l'équilibre entre $F_3$ et la force des ressorts, de sorte qu'elle dépend normalement du seul paramètre fonctionnel VE.

Cependant il est prévu une commande d'augmentation de l'excentricité, pour s'écarter de ladite position d'équilibre. Dans ce but, une rampe inclinée axialement 82 est ménagée au milieu du coulisseau 81 et coopère avec une rampe 83 d'une came 84 qui peut coulisser axialement dans l'élément E sous l'effet d'une tirette axiale 85 qui émerge à l'extérieur du carter. La came 84 agit de la même manière et simultanément sur l'excentricité des autres masselottes des deux dispositifs centrifuges 36 et 37. Si l'on déplace la tirette 85 vers la gauche selon les figures 2 et 3 au moyen d'une commande extérieure 86 (fig.1), on augmente l'excentricité des masselottes ; si on relâche la tirette, l'équilibre décrit ci-dessus est rétabli automatiquement par les ressorts de rappel 75, 76. La tirette 85 peut être placée le long de l'arbre d'entrée 30.

A partir du schéma de la figure 2, un homme du métier pourra écrire les conditions d'équilibre suivantes, où Ri représente le rayon du cercle primitif de la roue dentée portant le numéro de référence i :

$$Cx = + CM \left[\frac{R1*R3*R5}{R6(R1*R4 - R2*R3)}\right] + CR \left[\frac{R1*R3*R5}{R6(R1*R4 - R2*R3)}\right] \tag{1}$$

$$Cy = - CM \left[\frac{R10*R11*R14*R15}{R9*R16(R12*R13 - R11*R14)}\right] - CR \left[\frac{R10*R11*R13}{R9(R12*R13 - R11*R14)}\right] \tag{2}$$

L'égalité des vitesses V5 et V10 des satellites secondaires et VE du porte-satellites principal est déterminée par les équations suivantes :

$$R2*R3*R6 - R1*R4*(R6+R5) = 0 \tag{3}$$

$$R9*R11*R14 - R12*R13(R9 + R10) = 0 \tag{4}$$

Pour expliquer clairement le fonctionnement de la transmission et en particulier faire comprendre les vitesses relatives des différents éléments, on se référera à des valeurs pratiques des rayons des diverses roues dentées d'une transmission selon la figure 2, prévue pour transmettre un couple moteur CM de 200 Nm à 3000 tours/min tandis que le couple résistant CR varie de - 800 à - 160 Nm à une vitesse de 750 à 3750 tours/min. Les rayons primitifs Ri sont indiquées en millimètres dans le tableau I, i représentant le numéro de référence de chaque roue.

TABLEAU I

| | | |
|---|---|---|
| R1 = 26,18 | R9 =27 | R15 = 11,077 |
| R2 = 98,18 | R10=13,5 | R16 = 83,077 |
| R3 = 48 | R11 = 48 | R17 = 40,5 |
| R4 = 120 | R12 = 120 | R18 = 112,5 |
| R5 = 13,5 | R13 = 26,18 | |
| R6 = 27 | R14 = 98,18 | |

Il en résulte que $OO_1 = OO_2 = R16 - R15 = 72$ mm. Avec ces valeurs, le tableau II indique les vitesses de rotation V des divers éléments rotatifs, en valeurs relatives par rapport à la vitesse VM de l'arbre d'entrée 30, pour différentes vitesses relatives VR de l'arbre de sortie 31. VR (c'est-à-dire VR/VM pour VM = 1) représente donc aussi le rapport de transmission, ainsi que l'inverse du facteur de conversion CR/CM du couple si l'on fait abstraction des pertes énergétiques.

Les équations (1) et (2) deviennent :

$$Cx = - (2/5) \, CM - (2/5) \, CR \qquad (5)$$

$$Cy = + (1/5)CM + (2/5) \, CR \qquad (6)$$

TABLEAU II

| Elément | VR = 0 | VR = 1/4 | VR = 1/2 | VR = 3/4 | VR = 1 | VR = 5/4 |
|---|---|---|---|---|---|---|
| E | +2 | +7/4 | +3/2 | +5/4 | +1 | +3/4 |
| Dispositif 36 | | | | | | |
| 1 et 6 | -11/2 | -77/16 | -3318 | -55/16 | -11/4 | -33/16 |
| 5 | +2 | +7/4 | +3/2 | +5/4 | +1 | +3/4 |
| B1 | -3 | -21/8 | -9/4 | -15/8 | -3/2 | -9/8 |
| Dispositif 37 | | | | | | |
| 9, 13 et 15 | -11/2 | -31/8 | -9/4 | -5/8 | +1 | +21/8 |
| 10 | +2 | +7/4 | +3/2 | +5/4 | +1 | +3/4 |
| B2 | -3 | -2 | -1 | 0 | +1 | +2 |

On remarque que les vitesses des éléments 5 et 10 portant les masselottes sont toujours égales à celles de E, ce qui maintient toujours les centres de gravité des masselottes dans la position décrite plus haut. On notera aussi que, dans le présent exemple, la masse de chaque masselotte 51, 61 avec le coulisseau associé est de 742 g tandis que celle du coulisseau 81 est de 39 g.

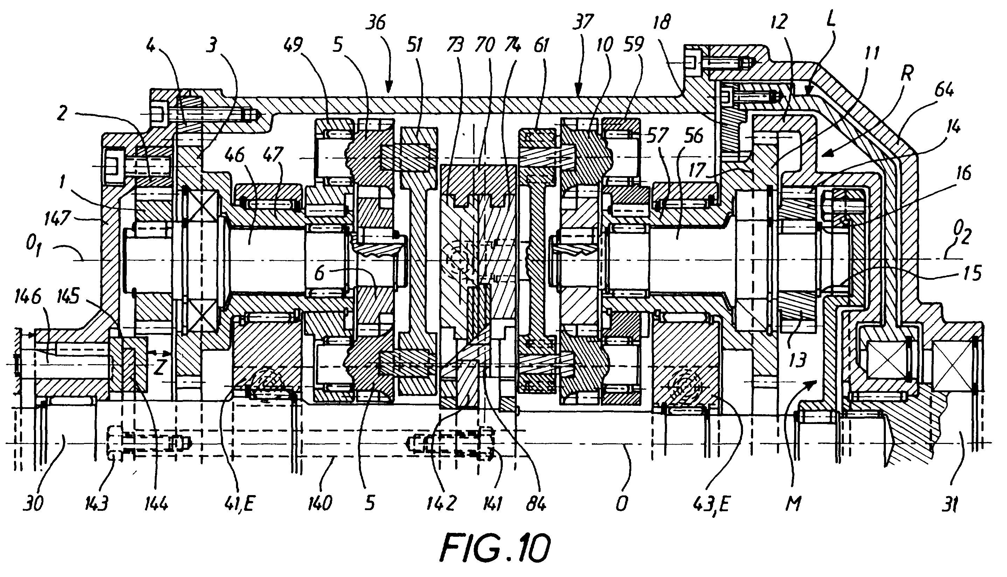

La figure 9 est un diagramme bien connu dit de Ravigneaux, illustrant en ordonnées les vitesses relatives de certains éléments des trains planétaires du premier et du deuxième dispositif centrifuge, et en abscisses les rapports de l'équation de Willis liant les vitesses des différents éléments d'un train planétaire.

Trois points alignés E, M et R représentent pour chaque état de fonctionnement les vitesses de rotation des éléments E, M et R du train planétaire 44 liant les arbres d'entrée et de sortie. La vitesse de l'élément M comprenant l'arbre d'entrée 30 est supposée constante pour simplifier et elle sert de référence. L'élément L du dispositif de marche arrière est aussi lié à ce train, son point représentatif est aussi aligné avec les trois autres. La relation linéaire entre les vitesses est la suivante :

$$(VM - VE) / (VR - VE) = + (R14*R15) / (R13*R16) = + 1/2$$

Au démarrage, l'élément R solidaire de l'arbre de sortie est immobile, ce que montre le point R sur l'horizontale V = 0 dans la figure 9. On amène la vitesse de l'arbre d'entrée solidaire de M à la vitesse optimale du moteur, par exemple 3000 tours/min, grâce à l'embrayage placé entre le moteur et la transmission. Cette vitesse sera maintenue ensuite constante, de même que le couple moteur CM, bien qu'on puisse faire varier l'un et l'autre au moyen de l'accélérateur. Le porte-satellites commun E est alors entraîné à une vitesse VE = +2 selon le tableau II et selon la droite 91 de la figure 9. Il en résulte que le coulisseau 81 du dispositif de commande 53 subit une force centrifuge et impose aux masselottes des excentricités respectives maximales, qui sont de 8 mm pour les masselottes 51 et de 9,33 mm pour les masselottes 61. Un couple Cx maximal est alors créé dans le dispositif centrifuge 36, et un couple Cy légèrement supérieur dans le dispositif centrifuge 37. Une fois que l'arbre de sortie 31 a démarré et que sa vitesse VR atteint 1/4 VM sur la droite 92 de la figure 9, c'est-à-dire que CR = -800 Nm, Cx = +6/5*CM = 240 Nm et Cy = -7/5*CM = -280 Nm, soit avec deux satellites Cx = 120 Nm et Cy = -140 Nm. A ce stade, les ressorts de rappel 75 sont comprimés à 450 N (compte tenu d'un coefficient de frottement de 10%) et les ressorts de rappel 76 à 800 N. Le couple Cx réagit en chaîne sur toutes les roues du premier dispositif centrifuge 36 pour équilibrer la réaction du carter avec le couple appliqué au porte-satellites E : $CP_1$ = - RC, avec RC = $RC_1$ + $RC_2$. Il est maximal dans l'état représenté par la droite 91, c'est-à-dire quand VR = 0.

C'est ce couple de réaction RC qui va être transmis par l'élément E au second dispositif centrifuge 37, où passe la totalité de la puissance motrice, tandis que le premier dispositif centrifuge 36 ne sert qu'à transmettre la réaction du carter.

Dans le second dispositif centrifuge 37, le couple centrifuge Cy dû aux masselottes 61 réagit en chaîne sur toutes les roues du deuxième dispositif centrifuge 37 pour équilibrer les couples CR + CM + $CP_2$ = 0, soit CR + CM + RC = 0. Le couple de sortie CR appliqué à l'arbre de sortie 31 est alors maximal et fait démarrer cet arbre, entraînant par exemple un véhicule. La vitesse de R peut atteindre par exemple 750 tours/min à la fin de la phase d'embrayage, ce qui correspond à la ligne 92 dans la figure 9 et à la colonne VR = 1/4 dans le tableau II. A ce stade, avec les dimensions données plus haut à titre d'exemple, le couple CR appliqué à l'arbre de sortie vaut quatre fois le couple moteur CM.

Ensuite la vitesse VR de l'élément résistant R augmente (dans le sens des flèches dans la figure 9) en fonction de la diminution du couple résistant CR, le cas échéant jusqu'à ce que VR = VM, dans l'état représenté par la droite 93, où l'ensemble des éléments du second dispositif 37 et tous ses pignons tournent en un seul bloc.

Pendant cette phase de montée en vitesse de R, l'excentricité des masselottes 51 du premier dispositif centrifuge 36 continue à diminuer au fur et à mesure que VR augmente. Lorsque VR atteint VM, l'excentricité des masselottes 51 est nulle, donc Cx = 0, tous les couples sont nuls dans le premier dispositif 36 et l'élément E ne transmet plus aucun couple au second dispositif 37, car RC = 0.

Par contre, les masselottes 61 ont encore une excentricité résiduelle pour VR = VM, créant ainsi un couple centrifuge Cy = -1/5*CM qui assure l'équilibre des couples dans le second dispositif 37 dont tous les éléments tournent à la vitesse VM. Les masselottes 61 jouent alors le rôle de balourds fixes. Comme il n'y a plus aucun déroulement des pignons les uns sur les autres, quand VR = VM, la transmission est alors en prise directe et son rendement énergétique est pratiquement égal à 1. Bien entendu, cet état peut exister pour n'importe quelle vitesse VM du moteur, avec un couple résistant CR égal et opposé à CM.

Si le couple résistant CR devient inférieur au couple moteur CM, le sens du couple de réaction du carter RC s'inverse, la vitesse VR de l'arbre de sortie devient supérieure à VM. On est en régime de "surmultipliée", le rapport de transmission étant supérieur à 1. Comme le montre le figure 9, la vitesse VE devient inférieure à VM. Le centre de gravité $G_1$ de chaque masselotte 51 passe alors de l'autre côté de l'axe radial $OO_1$. Le couple Cx change de sens, RC devient négatif et s'ajoute à CR pour égaler CM. Le centre de gravité $G_2$ de chaque masselotte 61 reste du même côté de $OO_2$ qu'auparavant, mais se rapproche de $O_2$. Le moteur peut agir en frein moteur à tous les régimes si l'on réduit son alimentation, comme avec une boîte de vitesses classique. Si le couple résistant augmente à nouveau, les phénomènes décrits ci-dessus s'inversent à nouveau automatiquement. Le conducteur d'un véhicule équipé d'une telle transmission automatique peut donc conduire sans intervenir sur la transmission, en agissant uniquement sur la pédale d'accélérateur pour régler la vitesse de marche au moyen de celle du moteur.

Cependant, on peut aussi donner au conducteur le moyen d'augmenter l'accélération en simulant une rétrogradation (effet "kick down") ou d'augmenter le frein moteur à volonté par le couple de réaction RC, au moyen d'une commande manuelle ou d'une commande électronique simple, agissant sur la tirette 85 pour modifier la loi de variation de l'excentricité des masselottes par rapport au couple résistant.

Pour actionner la marche arrière, il suffit de serrer le frein 63 pour bloquer l'élément L, de sorte que le point L se place sur l'horizontale V = 0 de la figure 9. L'état du train planétaire de sortie est alors représenté par la droite 95, où le point R se trouve au-dessous de V = 0 pour n'importe quelle vitesse positive de M. La vitesse VR de l'arbre de sortie varie automatiquement en fonction du couple résistant comme en marche avant, mais dans une gamme de rapports plus courts.

Pour commander cette transmission, il suffit donc d'un levier à deux positions, à savoir marche avant et marche arrière, l'excentricité des masselottes étant réglée automatiquement en fonction de la vitesse de sortie VR. La commande additionnelle 86 (figure 2) pour influencer autrement l'excentricité est facultative.

Avec les valeurs numériques données dans le tableau I et un couple nominal d'entrée de 200 Nm à 3000 tours/min, soit une puissance en régime de croisière d'environ 63 KW qui peut être celle d'une voiture de catégorie moyenne, le volume de la transmission agencée selon la figure 2, où les deux dispositifs centrifuges 36 et 37 sont disposés l'un derrière l'autre, présente un diamètre de l'ordre de 300 mm et une longueur de l'ordre de 350 mm. Ces valeurs sont inférieures à celles d'une transmission automatique classique à convertisseur hydrodynamique de couple et boîte planétaire à quatre rapports. Le seul organe à friction est le frein de marche arrière 63, qui ne travaille jamais en friction mais seulement pour bloquer L.

Il est aussi possible d'obtenir une construction plus courte si l'on dispose dans un même plan transversal les deux jeux d'éléments centrifuges 40 et 42 (figure 1) des dispositifs 36 et 37, grâce au fait qu'ils ont un porte-satellites commun 41 et 43 formant l'élément E. Le volume de la transmission correspond alors à un diamètre d'environ 380 mm et une longueur d'environ 250 mm pour l'exemple du paragraphe précédent. Bien entendu, le nombre des éléments centrifuges satellites 40, 42 peut être différent, par exemple trois éléments dans chaque dispositif centrifuge 36, 37 pour qu'on ait des trains planétaires principaux à trois satellites.

La figure 10 montre à titre d'exemple, en coupe longitudinale, la construction de la transmission décrite ci-dessus en référence aux figures 2 à 9. On y retrouve les éléments représentés schématiquement dans la figure 2, avec les mêmes numéros de référence. En outre, on voit que la tirette axiale 85 actionnant les cames 84 dans le porte-satellites commun E comprend deux bras axiaux 140 disposés de part et d'autre de l'arbre d'entrée 30 et fixés par des boulons 141 à une pièce annulaire 142 supportant les deux cames opposées 84. L'autre extrémité de chaque bras 140 est fixée par un boulon 143 à un disque annulaire 144 qui tourne (à la vitesse de l'élément E) dans une fourchette 145 portée par une tige de commande 146 pouvant coulisser avec une course Z dans un couvercle 147 du carter. Cette tige est actionnée par la commande extérieure 86 mentionnée en référence à la figure 2.

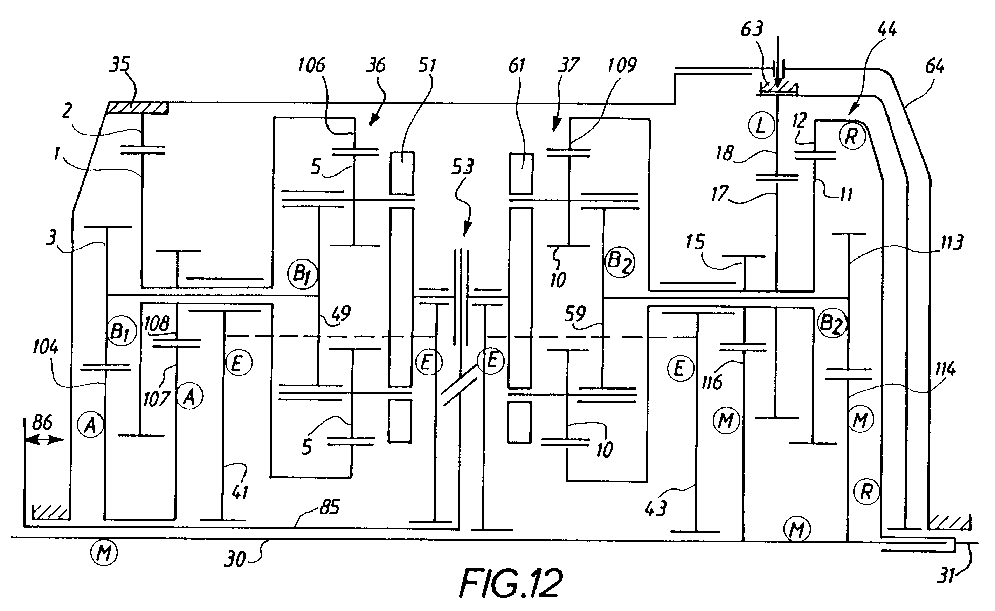

La figure 11 est un diagramme de Ravigneaux illustrant une variante de transmission selon l'invention qui correspond au schéma de la figure 2, mais avec des dimensions différentes pour transmettre de plus grandes puissances, par exemple dans un véhicule lourd à moteur Diesel ayant une vitesse optimale VM de 2000 tours/min. Dans ce cas, chaque dispositif centrifuge 36, 37 comporte quatre éléments centrifuges 40, 42, donc quatre satellites principaux montés à 90° et quatre masselottes excentriques 51, 61.

Compte tenu de l'application aux véhicules lourds, il est prévu que l'arbre de sortie 31 entraîne les roues par l'entremise d'un groupe démultiplicateur planétaire commandé séparément par le conducteur, pour assurer soit une prise directe, soit une démultiplication supplémentaire de rapport 1/2 pour la marche lente. Avec un tel groupe, la transmission assure une variation continue de la vitesse de marche et de conversion du couple dans une gamme de 1 à 8.

Les valeurs des rayons du tableau I peuvent être remplacées par celles du tableau III ci-dessous, la valeur $OO_1$ étant égale à 115,5 mm.

TABLEAU III (en mm)

| R1 = 42 | R 9 = 44 | R15=22 |
|---|---|---|
| R2 = 157,5 | R10 = 22 | R16 = 137,5 |
| R3 = 77 | R11 = 77 | R17 = 71,46 |
| R4 = 192,5 | R12 = 192,5 | R18 = 196,96 |
| R5 = 22 | R13 = 42 | |
| R6 = 44 | R14 = 157,5 | |

Avec ces valeurs, les couples centrifuges nécessaires sont donnés par les équations suivantes :

$$Cx = - (2/5)*CM - (2/5)*CR \tag{7}$$

$$Cy = + (6/25)*CM + (2/5)*CR \tag{8}$$

Les valeurs des vitesses par rapport à VM sont données dans le tableau IV.

TABLEAU IV

| Elément | VR = 0 | VR = 1/4 | VR = 1/2 | VR = 3/4 | VR = 1 |
|---|---|---|---|---|---|
| E | +5/2 | +17/8 | +7/4 | +11/8 | +1 |
| Dispositif 36 | | | | | |
| 1 et 6 | -55/8 | -187/32 | -77/16 | -121/32 | -11/4 |
| 5 | +5/2 | +17/8 | +7/4 | +11/8 | +1 |
| B1 | -15/4 | -51/16 | -21/8 | -33/16 | -3/2 |
| Dispositif 37 | | | | | |
| 9, 13 et 15 | -55/8 | -157/32 | -47/16 | -31/32 | +1 |
| 10 | +5/2 | +17/8 | +7/4 | +11/8 | +1 |
| B2 | -15/4 | -41/16 | -11/8 | -3/16 | +1 |

Dans le diagramme de Ravigneaux de la figure 11, les droites 96, 97 et 98 correspondent aux droites 91, 93 et 95 de la figure 9. La droite 99 reliant les points O, $R_1$ et R représente l'effet du démultiplicateur qui, lorsqu'il est sur le rapport 1/2 entraîne un arbre de transmission $R_1$ à la moitié de la vitesse VR de l'arbre de sortie 31.

Avec un couple moteur de 1800 Nm à 2000 tours/min, une telle transmission peut délivrer un couple de sortie variant de -14400 à -1800 Nm pour des vitesses de 250 à 2000 tours/min.

Les figures 12 et 13 illustrent une autre forme de réalisation d'une transmission selon le principe de la figure 1, destinée à transmettre des puissances petites à moyennes. On décrira seulement les différences avec le schéma de la figure 2. Dans ce cas, il n'y a qu'un seul point d'appui 35 sur le carter, pour transmettre le couple de réaction CR sur le pignon 1 de chaque satellite principal du premier dispositif centrifuge 36. Ce pignon 1 est solidaire d'une couronne 106 remplaçant le pignon 6. Le second point d'appui 48 de la figure 2 est remplacé par une liaison entre le pignon 3 et un pignon 108 solidaire des roues 1 et 106, grâce à un élément centré A ayant des pignons planétaires 104 et 107 qui s'engrènent respectivement sur les pignons 3 et 108.

La disposition des masselottes 51 et 61 et du dispositif de commande d'excentricité 53 est semblable à celle des figures 2 à 8.

Dans le second dispositif centrifuge 37, une couronne 109 remplace le pignon 9 et elle est entraînée par l'élément moteur M au moyen d'un pignon planétaire 116 remplaçant la couronne 16. Le porte-satellites secondaire 59 est solidaire d'un pignon 113 qui est entraîné par un pignon 114 de l'élément M.

Avec cet arrangement, les conditions d'équilibre des couples deviennent :

$$Cx = - CM \left[\frac{R1*R3*R5*R107}{R2*R106(R104*R108 - R3*R107)}\right] - CR \left[\frac{R1*R3*R5*R107}{R2*R106(R104*R108 - R3*R107)}\right] \tag{9}$$

$$Cy = - CM \left[\frac{R10*R15*R113}{R109(R15*R114 - R116*R113)}\right] + CR \left[\frac{R10*R11*R116*R113}{R12*R109(R15*R114 - R116*R113)}\right] \tag{10}$$

et l'égalité des vitesses V5 et V10 des satellites secondaires et VE du porte-satellites principal est déterminée par :

$$R104*R108 (R106 -R5) - R3*R107*R106 = 0 \tag{11}$$

$$R15*R114 (R109-R10) - R109*R116*R113 = 0 \tag{12}$$

Dans un exemple pratique où l'entraxe $OO_1 = OO_2 = 72$ mm, les valeurs des rayons des roues dentées sont données en millimètres ci-dessous :

| | |
|---|---|
| R1 = R11 = 48 | R106 = R109 = 48 |
| R2 = R12 = 120 | R107 = R116 = 54 |
| R3 = R113 = 13,1 | R108 = R15 = 18 |

(suite)

| R104 = R114 = 58,9 | R17 = 29,5 |
|---|---|
| R5 = R10 = 16 | R18=101,5 |

Les équations (9) et (10) deviennent :

$$Cx = - (4/15) \, CM - (4/15) \, CR \qquad (13)$$

$$Cy = - (2/9) \, CM + (4/15) \, CR \qquad (14)$$

Le diagramme de Ravigneaux de la figure 13 est basé sur les relations entre vitesses :

$$VE = (6/11) \, VM + (5/11) \, VR$$

$$VA = (11/6) \, VE$$

Il illustre les vitesses relatives données dans le tableau ci-dessus, par rapport à VM supposée constante (par exemple 4000 tours/min) en marche avant. Les droites 121 et 131 correspondent à VR = 0, les droites 122 et 132 à VR = 1/4, les droites 123 et 133 à VR = 1 (prise directe) et les droites 124 et 134 à VR = 5/4 (surmultipliée). La droite 120 correspond à la marche arrière quand le frein 63 bloque l'élément L.

Il faut noter qu'on peut aussi utiliser une transmission selon l'invention dans le but d'entraîner à une vitesse constante l'arbre de sortie 31 au moyen de l'arbre d'entrée 30 tournant à une vitesse variable, généralement inférieure ou égale à celle de l'arbre de sortie, mais pouvant être supérieure dans certains cas. Une application typique de ce genre se rencontre dans l'entraînement de génératrices électriques à une vitesse de synchronisme prédéterminée, à partir d'une machine à vitesse variable telle qu'une turbine hydraulique ou éolienne, ou lors d'un freinage à récupération électrique dans un véhicule à propulsion électrique.

La description des exemples ci-dessus montre bien que l'invention fournit une transmission automatique ne possédant que des roues dentées, qui sont en prise en permanence. Elle est automatique et continue puisque c'est le couple résistant qui commande la variation de vitesse et de rapport de transmission. Elle peut offrir en plus différents programmes ou modes de fonctionnement si elle est dotée d'une commande électronique d'excentricité des masselottes.

## Revendications

1. Transmission mécanique à variation continue automatique, comportant un arbre d'entrée (30), un arbre de sortie (31), un point d'appui (35, 48) lié à un carter (64) de la transmission, une liaison cinématique positive pourvue d'un ensemble planétaire à engrenages (44) et reliant l'arbre d'entrée, le point d'appui et l'arbre de sortie, et des moyens de compensation de couple comportant des masselottes excentriques (51, 61) soumises à des forces centrifuges qui produisent des couples sur deux jeux de satellites de l'ensemble planétaire, caractérisée :

   - en ce que le premier et le second jeu de satellites sont portés par un porte-satellites commun (E),
   - en ce que le premier jeu de satellites (1, 3) coopère avec au moins une denture (2, 4) formant ledit point d'appui (35, 48) et est associé à un premier dispositif centrifuge (36) à masselottes excentriques (51),
   - en ce que le second jeu de satellites (11, 13, 15) coopère avec des roues planétaires (12, 14, 16) liées respectivement à l'arbre d'entrée (30) et à l'arbre de sortie (31) et est associé à un second dispositif centrifuge (37) à masselottes excentriques (61),
   - en ce que chacun des deux dispositifs centrifuges (36, 37) comporte, sur chaque satellite du premier et du second jeu, un train planétaire secondaire (5, 6, 49 ; 9, 10, 59) dont des satellites secondaires (5, 10) sont liés aux masselottes excentriques (51, 61) et tournent sur eux-mêmes à une vitesse égale à celle du porte-satellites commun (E),
   - et en ce que l'excentricité des masselottes est réglable en marche.

2. Transmission selon la revendication 1, caractérisée en ce qu'elle comporte des moyens (53) pour régler automatiquement l'excentricité des masselottes (51, 61) en fonction de la vitesse du porte-satellites commun (E).

3. Transmission selon la revendication 2, caractérisée en ce que lesdits moyens pour régler l'excentricité comportent un dispositif de commande (53) monté sur le porte-satellites commun (E) et actionné par la force centrifuge.

4. Transmission selon la revendication 3, caractérisée en ce qu'elle comporte en outre une commande extérieure (85, 86) agissant sur le dispositif de commande d'excentricité (53) en superposition à la force centrifuge.

5. Transmission selon la revendication 2, caractérisée en ce que la variation de l'excentricité des masselottes (51, 61) en fonction de la vitesse du porte-satellites commun (E) est différente dans les deux dispositifs centrifuges (36, 37), la transmission ayant un régime dit de prise directe où l'excentricité est nulle dans le premier dispositif (36) et non nulle dans le second dispositif (37).

6. Transmission selon la revendication 1, caractérisée en ce que chaque train planétaire secondaire (5, 6, 49 ; 9, 10, 59) comporte une seule masselotte excentrique (51, 61), qui est montée de manière coulissante et pivotante sur au moins deux satellites (5, 10) de ce train planétaire.

7. Transmission selon les revendications 3 et 6, caractérisée en ce que le dispositif de commande d'excentricité (53) est commun aux deux dispositifs centrifuges (36, 37).

8. Transmission selon la revendication 1, caractérisée en ce que chaque train planétaire secondaire (5, 6, 49, 106) du premier dispositif centrifuge (36) comporte un élément (1, 6, 46 ; 1, 106) formant une roue planétaire secondaire (6, 106) et un élément (3, 47, 49) formant un porte-satellites secondaire (49), lesdits éléments étant montés coaxialement sur le porte-satellites commun (E) et coopérant chacun directement ou indirectement, avec au moins une denture (2, 4) formant un point d'appui (35, 48) sur le carter et leur imposant un rapport de vitesses fixe.

9. Transmission selon la revendication 1, caractérisée en ce que chaque train planétaire secondaire (9, 10, 59, 109) du second dispositif centrifuge (37) comporte un élément (9, 13, 15, 56 ; 109, 11, 15, 17) formant une roue planétaire secondaire (9, 109) et un élément (11, 17, 57, 59, ; 113, 59) formant un porte-satellites secondaire (59), lesdits éléments étant reliés l'un à l'autre au moyen de pignons (12, 14 : 114, 116) qui leur imposent un rapport de vitesses fixe.

10. Transmission selon l'une des revendications 1 à 9, caractérisée en ce que le premier et le second dispositif centrifuge (36, 37) sont disposés l'un derrière l'autre dans la direction d'un axe commun (O) des arbres d'entrée et de sortie (30, 31).

11. Transmission selon l'une des revendications 1 à 9, caractérisée en ce que le premier et le second dispositif centrifuge (36, 37) sont disposés sensiblement dans un même plan radial par rapport à un axe commun (O) des arbres d'entrée et de sortie (30, 31), les satellites du premier jeu étant placés entre les satellites du second jeu.

12. Procédé de mise en action d'une transmission selon la revendication 1, caractérisé en ce que l'on compare la vitesse de l'arbre de sortie (31) à la vitesse de l'arbre d'entrée (30), en ce que l'on donne une excentricité positive maximale aux masselottes (49, 50, 59, 60) pour une valeur minimale de la vitesse de l'arbre de sortie, et en ce que l'on réduit l'excentricité des masselottes quand la vitesse de l'arbre de sortie se rapproche de celle de l'arbre d'entrée.

13. Procédé selon la revendication 12, caractérisé en ce que, lorsque la vitesse de l'arbre de sortie est sensiblement égale à celle de l'arbre d'entrée, l'excentricité des masselottes est réglée à une valeur nulle dans le premier dispositif centrifuge (36) et à une valeur réduite prédéterminée dans le second dispositif centrifuge (37).

14. Procédé selon la revendication 13, caractérisé en ce que, pour une vitesse de l'arbre de sortie dépassant celle de l'arbre d'entrée, l'excentricité des masselottes est réglée à une valeur qui s'inverse dans le premier dispositif centrifuge (36) et à une valeur inférieure à ladite valeur réduite prédéterminée dans le second dispositif centrifuge (37).

**Patentansprüche**

1. Das stufenlose automatische mechanische Getriebe mit einer Eingangswelle (30), einer Ausgangswelle (31) und einem Stützpunkt (35, 48), welcher mit dem Getriebegehäuse (64) verbunden ist, einem positiven Elementenpaar, das mit einer Getriebeplaneteneinheit (44) versehen ist und die Eingangswelle, den Stützpunkt und die Ausgangswelle miteinander verbindet, sowie Drehmomentausgleichsvorrichtungen mit exzentrischen Schwungmassen (51, 61), die Zentrifugalkräften unterworfen werden, welche auf zwei Planetenradsätzen der Planeteneinheit Drehmomente erzeugen, wird wie folgt gekennzeichnet:

   - dadurch, daß der erste und der zweite Planetenradsatz von einem gemeinsamen Planetenradträger (E) getragen werden,
   - dadurch, daß der erste Planetenradsatz (1, 3) mit mindestens einer Verzahnung (2, 4) zusammenwirkt, die den besagten Stützpunkt (35, 48) bildet, und mit einer ersten Zentrifugalvorrichtung (36) mit exzentrischen Schwungmassen (51) verbunden ist,
   - dadurch, daß der zweite Planetenradsatz (11, 13, 15) mit Planetenrädern (12, 14, 16) zusammenwirkt, die jeweils an die Eingangswelle (30) und an die Ausgangswelle (31) angebunden sind, und mit einer zweiten Zentrifugalvorrichtung (37) mit exzentrischen Schwungmassen (61) verbunden ist,
   - dadurch, daß jede der beiden Zentrifugalvorrichtungen (36, 37) auf jedem Planetenrad des ersten und des zweiten Satzes mit einem zweiten Planetengetriebe (5, 6, 49; 9, 10, 59) versehen ist, dessen zweite Planetenräder (5, 10) mit den exzentrischen Schwungmassen (51, 61) verbunden sind und die sich mit einer Geschwindigkeit um sich selbst drehen, die der Geschwindigkeit des gemeinsamen Planetenradträgers (E) entspricht,
   - dadurch, daß die Exzentrizität der Schwungmassen im Betrieb einstellbar ist.

2. Getriebe gemäß Anforderung 1, dadurch gekennzeichnet, daß es mit Vorrichtungen (53) versehen ist, um die automatische Einstellung der Exzentrizität der Schwungmassen (51, 61) in Abhängigkeit der Geschwindigkeit des gemeinsamen Planetenradträgers (E) zu ermöglichen.

3. Getriebe gemäß Anforderung 2, dadurch gekennzeichnet, daß die besagten Vorrichtungen zur Einstellung der Exzentrizität mit einer Steuervorrichtung (53) ausgestattet sind, die auf den gemeinsamen Planetenradträger (E) montiert und durch die Zentrifugalkraft angetrieben wird.

4. Getriebe gemäß Anforderung 3, dadurch gekennzeichnet, daß es mit einer zusätzlichen Fremdsteuerung (85, 86) versehen ist, die zusätzlich zur Zentrifugalkraft auf die Exzentrizitätssteuervorrichtung (53) wirkt.

5. Getriebe gemäß Anforderung 2, dadurch gekennzeichnet, daß die Exzentrizitätsänderung der Schwungmassen (51, 61) in Abhängigkeit der Geschwindigkeit des gemeinsamen Planetenradträgers (E) in den beiden Zentrifugalvorrichtungen (36, 37) unterschiedlich ist, wobei das Getriebe einen sogenannten Direktmitnahmebetrieb aufweist, bei dem die Exzentrizität in der ersten Vorrichtung (36) gleich Null und in der zweiten Vorrichtung (37) ungleich Null ist.

6. Getriebe gemäß Anforderung 1, dadurch gekennzeichnet, daß jedes zweite Planetengetriebe (5, 6, 49; 9, 10,59) aus einer einzigen exzentrischen Schwungmasse (51, 61) besteht, die verschiebbar und schwenkbar auf mindestens zwei Planetenräder (5, 10) dieses Planetengetriebes montiert wird.

7. Getriebe gemäß Anforderungen 3 und 6, dadurch gekennzeichnet, daß die Exzentrizitätssteuervorrichtung (53) für beide Zentrifugalvorrichtungen (36, 37) gemeinsam ist.

8. Getriebe gemäß Anforderung 1, dadurch gekennzeichnet, daß alle zweiten Planetengetriebe (5, 6, 49, 106) der ersten Zentrifugalvorrichtung (36) mit einem Element (1, 6, 46; 1, 106) versehen sind, das ein zweites Planetenrad (6, 106) bildet, und mit einem anderen Element (3, 47, 49) versehen sind, das einen zweiten Planetenradträger (49) bildet, wobei die besagten Elemente koaxial auf den gemeinsamen Planetenradträger (E) montiert werden, direkt oder indirekt zusammenwirken und mindestens eine Verzahnung (2, 4) besitzen, die einen Stützpunkt (35, 48) auf dem Gehäuse bildet und die ihnen ein festes Geschwindigkeitsverhältnis aufzwingt.

9. Getriebe gemäß Anforderung 1, dadurch gekennzeichnet, daß alle zweiten Planetengetriebe (9, 10, 59, 109) der zweiten Zentrifugalvorrichtung (37) ein Element (9, 13, 15, 56; 109, 11, 15, 17) besitzen, das ein zweites Planetenrad (9, 109) bildet, und ein anderes Element (11, 17, 57, 59; 113, 59) besitzen, das einen zweiten Planetenradträger (59) bildet, wobei die besagten Elemente mit Hilfe von Ritzeln (12, 14; 114, 116) miteinander verbunden werden, die ihnen ein festes Geschwindigkeitsverhältnis aufzwingen.

10. Getriebe gemäß einer der Anforderungen 1 bis 9, dadurch gekennzeichnet, daß die erste und die zweite Zentrifugalvorrichtung (36, 37) in Richtung einer gemeinsamen Achse (O) der Eingangs- und Ausgangswelle (30, 31) hintereinander angeordnet sind.

11. Getriebe gemäß einer der Anforderunggen 1 bis 9, dadurch gekennzeichnet, daß die erste und die zweite Zentrifugalvorrichtung (36, 37) merklich in derselben radialen Ebene in Bezug auf eine gemeinsame Achse (O) der Eingangs- und Ausgangswelle (30, 31) angeordnet sind, wobei die Planetenräder des ersten Satzes zwischen die Planetenräder des zweiten Satzes positioniert werden.

12. Verfahren zur Inbetriebnahme eines Getriebes gemäß Anforderung 1, dadurch gekennzeichnet, daß die Geschwindigkeit der Ausgangswelle (31) mit der Geschwindigkeit der Eingangswelle (30) verglichen wird, dadurch daß die Schwungmasse (49, 50, 59, 60) eine maximale positive Exzentrizität bei einem Mindestgeschwindigkeitswert der Ausgangswelle zugeordnet wird und dadurch daß die Exzentrizität der Schwungmassen reduziert wird, wenn sich die Geschwindigkeit der Ausgangswelle an die Geschwindigkeit der Eingangswelle annähert.

13. Verfahren gemäß Anforderung 12, dadurch gekennzeichnet, daß die Exzentrizität der Schwungmassen, wenn die Geschwindigkeit der Ausgangswelle merklich der Geschwindigkeit der Eingangswelle entspricht, in der ersten Zentrifugalvorrichtung (36) auf einen Nullwert und in der zweiten Zentrifugalvorrichtung (37) auf einen vorbestimmten reduzierten Wert eingestellt wird.

14. Verfahren gemäß Anforderung 13, dadurch gekennzeichnet, daß die Exzentrizität der Schwungmassen, wenn die Geschwindigkeit der Ausgangswelle die Geschwindigkeit der Eingangswelle überschreitet, in der ersten Zentrifugalvorrichtung (36) auf einen Wert eingestellt wird, der dort umgekehrt wird, und in der zweiten Zentrifugalvorrichtung (37) auf einen Wert eingestellt wird, der niedriger als der besagte vorbestimmte reduzierte Wert ist.

## Claims

1. Automatic continuously variable mechanical transmission, comprising an input shaft (30), an output shaft (31), a point of support (35, 48) linked to a case (64) in the transmission, a positive kinematic link provided with a planetary gear train unit (44) and linking the input shaft, the point of support and the output shaft, and torque compensation means comprising eccentric weights (51, 61) subject to centrifugal forces which produce torques on two sets of planet wheels in the planetary unit, characterized :

   - in that the first and the second set of planet wheels are carried by a common planet wheel carrier (E),
   - in that the first set of planet wheels (1, 3) cooperate with at least one toothing (2, 4) forming said point of support (35, 48) and which is associated with a first centrifugal device (36) with eccentric weights (51),
   - in that the second set of planet wheels (11, 13, 15) cooperates with planet wheels (12, 14, 16) linked respectively to the input shaft (30) and to the output shaft (31) and which is associated with a second centrifugal device (37) with eccentric weights (61),
   - in that each of the two centrifugal devices (36, 37) comprises, on each planet wheel of the first and second set, a secondary planetary gear train (5, 6, 49 ; 9, 10, 59) the secondary planet wheels (5, 10) of which are linked to the eccentric weights (51, 61) and rotate around themselves at a speed equal to that of the common planet wheel carrier (E),
   - and in that the eccentricity of the weights is adjustable while operating.

2. Transmission according to claim 1, characterized in that it comprises means (53) to automatically set the eccentricity of the weights (51, 61) according to the speed of the common planet wheel carrier (E).

3. Transmission according to claim 2, characterized in that said means to set the eccentricity comprise a control device (53) mounted on the common planet wheel carrier (E) and actuated by centrifugal force.

4. Transmission according to claim 3, characterized in that it furthermore comprises an external control device (85, 86) acting on the eccentricity control device (53) superposed on the centrifugal force.

5. Transmission according to claim 2, characterized in that the variation in the eccentricity of the weights (51, 61) according to the speed of the common planet wheel carrier (E) differs in the two centrifugal devices (36, 37), the transmission operating in so-called direct drive where the eccentricity is zero in the first device (36) and not zero in the second device (37).

6. Transmission according to claim 1, characterized in that each secondary planetary gear train (5, 6, 49 ; 9, 10, 59) comprises one single eccentric weight (51, 61), which is mounted slidably and pivotably on at least two planet wheels (5, 10) in this planetary gear train.

7. Transmission according to claims 3 and 6, characterized in that the eccentricity control device (53) is common to the two centrifugal devices (36, 37).

8. Transmission according to claim 1, characterized in that each secondary planetary gear train (5, 6, 49, 106) of the first centrifugal device (36) comprises a part (1, 6, 46; 1, 106) forming a secondary planet wheel (6, 106) and a part (3, 47, 49) forming a secondary planet wheel carrier (49), said parts being mounted coaxially on the common planet wheel carrier (E) and each cooperating directly or indirectly, with at least one toothing (2, 4) forming a point of support (35, 48) on the case and imposing a fixed gear ratio on them.

9. Transmission according to claim 1, characterized in that each secondary planetary gear train (9, 10, 59, 109) of the second centrifugal device (37) comprises a part (9, 13, 15, 56 ; 109, 11, 15, 17) forming a secondary planet wheel (9, 109) and a part (11, 17, 57, 59, ; 113, 59) forming a secondary planet wheel carrier (59), said parts being linked to one another by means of pinions (12, 14 : 114, 116) which impose a fixed gear ratio on them.

10. Transmission according to one of the claims 1 to 9, characterized in that the first and the second centrifugal device (36, 37) are positoned one behind the other in the direction of a common axis (O) of the input and output shafts (30, 31).

11. Transmission according to one of the claims 1 to 9, characterized in that the first and the second centrifugal device (36, 37) are positioned substantially in the same radial plane in relation to a common axis (O) of the input and output shafts (30, 31), the planet wheels of the first set being placed between the planet wheels of the second set.

12. Method for actuating a transmission according to claim 1, characterized in that the speed of the output shaft (31) is compared with the speed of the input shaft (30), in that a maximum positive eccentricity is given to the weights (49, 50, 59, 60) for a minimum value of the output shaft's speed, and in that the eccentricity of the weights is reduced when the speed of the output shaft approaches that of the input shaft.

13. Method according to claim 12, characterized in that, when the speed of the output shaft is substantially equal to that of the input shaft, the eccentricity of the weights is set to a zero value in the first centrifugal device (36) and to a predetermined reduced value in the second centrifugal device (37).

14. Method according to claim 13, characterized in that, for a speed of the output shaft exceeding that of the input shaft, the eccentricity of the weights is set to a value which reverses in the first centrifugal device (36) and to a value which is less than said predetermined reduced value in the second centrifugal device (37).

EP 0 756 675 B1

FIG.1

FIG.9

FIG.11

16

FIG. 2

FIG.3

FIG.4

FIG.13

FIG.5

FIG.6

FIG.7

FIG.8

FIG.10

EP 0 756 675 B1

FIG.12

EP 0 756 675 B1